# EUROPEAN PATENT SPECIFICATION

(11) **EP 0 447 372 B1**
(45) Date of publication and mention of the grant of the patent: **27.12.1995**
(21) Application number: 91830074.0
(22) Date of filing: 06.03.1991
(51) Int. Cl.: B60R 3/02

(54) **Apparatus with movable steps for installation on habitable vehicles**
Vorrichtung mit bewegbaren Trittstufen zum Einbau in bewohnbaren Fahrzeugen
Dispositif de marches escamotables, destiné à être monté sur des véhicules habitables

(30) Priority: 12.03.1990 IT 933890
(43) Date of publication of application: 18.09.1991
(73) Proprietor: OFF. MECC. BACCONI S.N.C., 53036 Poggibonsi (Siena) (IT)
(72) Inventor: Bacconi, Giorgio, I-53036 Poggibonsi, Siena (IT)
(74) Representative: Fiammenghi-Domenighetti, Delfina

(56) References cited:
- EP-A- 0 012 336
- EP-A- 0 118 400
- DE-C- 840 195
- FR-A- 2 608 535

## Description

The invention relates to an apparatus able to provide a two-step system for the access to the inside of a habitable vehicle (caravan, camper and other) also in such vehicles that have a footboard which is significantly lifted up from the ground, and to quickly achieve a storage condition with the steps withdrawn within the vehicle outline. The apparatus is simple, reliable and economical.

The following prior documents are already known. D1 EP-A-0 012 336 relates to a prismatic body with a plurality of integrally formed steps, located below the door of a bus, below its floor. The prismatic body may be rotated about a horizontal lawer axis, starting from an operative position to a vertical position in which it is within the profile of the bus, and the base of the prismatic body is aligned with the side wall of the bus.

D2 FR-A-2 608 535 relates to a plate movable inside a frame having two lateral guides, the plate serving as a unique step when it projects out of the frame. The frame is fired below the floor of a vehicle, and the plate is moved by means of a hand grip from the inside of the vehicle.

D3 DE-A- 840 195 discloses a device in which the door of the vehicle automatically causes (when the user moves it) the turnover of the movable steps in the operative position or their rotation back to a vertical position when the door is closed.

Substantially, the present apparatus comprises:
- a framework feed under the footboard of the interior compartment of the vehicle;
- a unit pivoted on said framework through a horizontal axis, said unit forming an upper step and guide means;
- a frame sliding along said guide means and forming the tread of a lower step;
- means for determining the angular displacements of said unit so as to cause it to take up a storage condition with the treads of the two steps in vertical position within the outline of the interior compartment of the vehicle, and an operative condition with said treads being in horizontal position; and
- means to slide said lower step into a more projecting and offset position with respect to the upper step, in the operative condition.

Said sliding frame may be urged by spring means in its operative condition, and held in a retracted position - against the action of said spring means - by a hook which is made inoperative at the end of the downwards stroke of said unit to allow said spring means to position the lower step correctly. Shifting into the operative position may be at least facilitated by gravity, by having the guides of the sliding frame in such a position that they are inclined in the operative condition; this allows also a lowering of the lower step. Said spring means may be so calibrated as to be weaker than the gravity force during lifting of the treads into the vertical position, so that the weight itself of said frame forming the tread of the lower step causes the backwards sliding of the frame and the retention thereof by the hook at the end of the lifting of the treads into vertical position up to the storage position.

Further advantageous embodiments of the apparatus according to the present invention are set out in the appended claims.

The invention will be better understood by following the description and the attached drawing, which shows a practical, not limiting example of the invention. In the drawing:
Fig. 1 shows a side view in partial vertical section of the apparatus in the storage condition;
Fig. 2 shows a view similar to that of Fig. 1, but not sectioned, which shows the condition when the step treads are disposed to go up and down thereon;
Fig. 3 is a section on line III-III in Fig. 2;
Fig. 4 shows a view on line IV-IV in Fig. 2;
Fig. 5 shows a modified embodiment in a schematic side view;
Figs. 6 and 7 show two perspective views of the steps of the embodiment of Fig. 5 in their storage and operative condition, respectively;
Figs. 8, 9 and 10 show vertical sections on line VIII-VIII in Fig. 6, in an intermediate condition, and on line X-X in Fig. 7;
Figs. 11 and 12 show two means for respectively controlling and driving the movements in the various positions; and
Fig. 13 shows a view from a side opposite to that of Figs. 11 and 12.

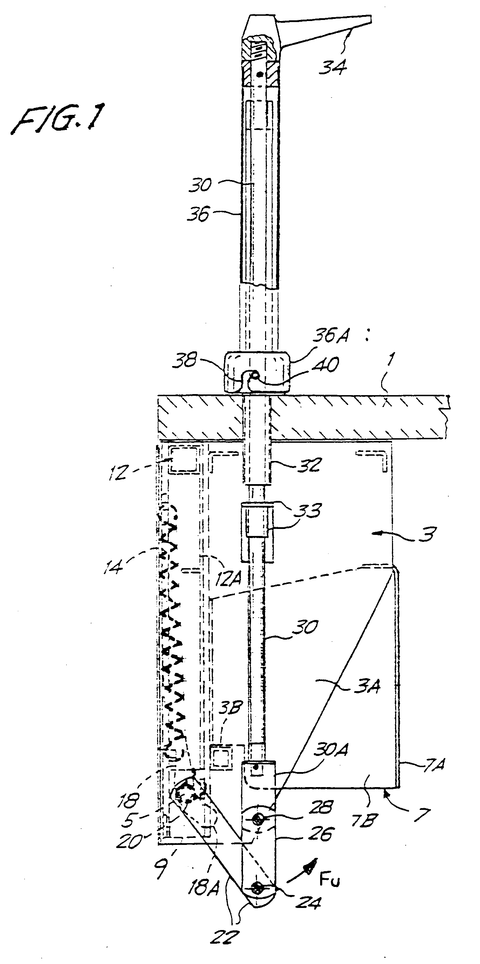

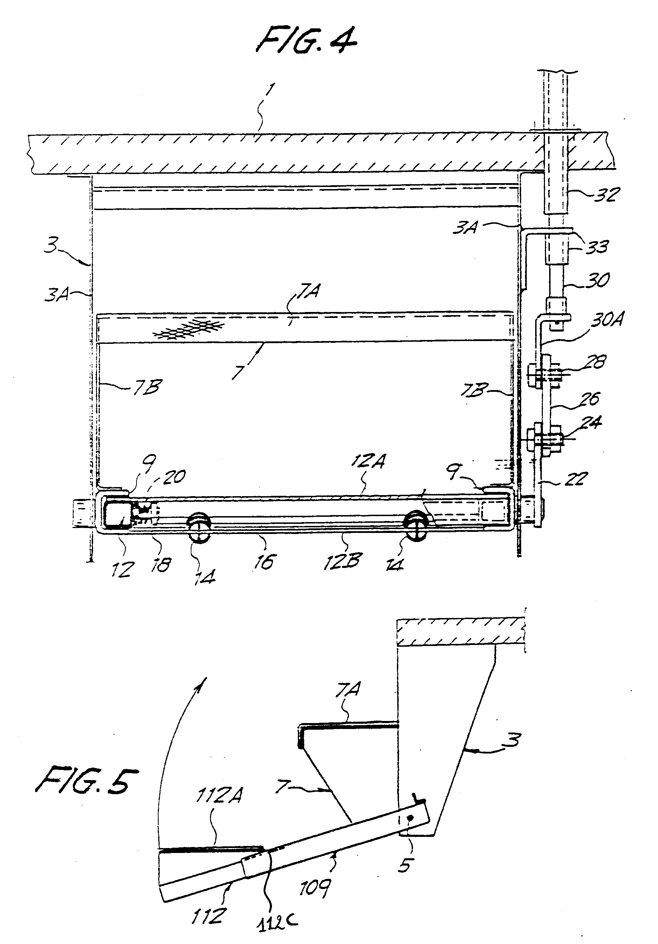

According to what is illustrated in the attached drawings (Figs. 1 to 5), numeral 1 indicates the horizontal structure which forms the footboard inside the vehicle in correspondence of the entrance, below which there is applied an apparatus according to the invention which is placed against said structure 1. In particular, numeral 3 indicates a fixed framework under the footboard 1; said framework substantially comprises two flanges 3A extending downwardly under the footboard as far as the limit of the lower outline of the vehicle, the latter being either towed or motor-driven. Moreover, the two flanges 3A are connected one to the other by a crosspiece 3B and are also provided for supporting a horizontal axis 5 which is placed substantially at the level of the lower step of the apparatus. The apparatus comprises two steps for easily get over the difference in height between the ground and the plane of the footboard 1.

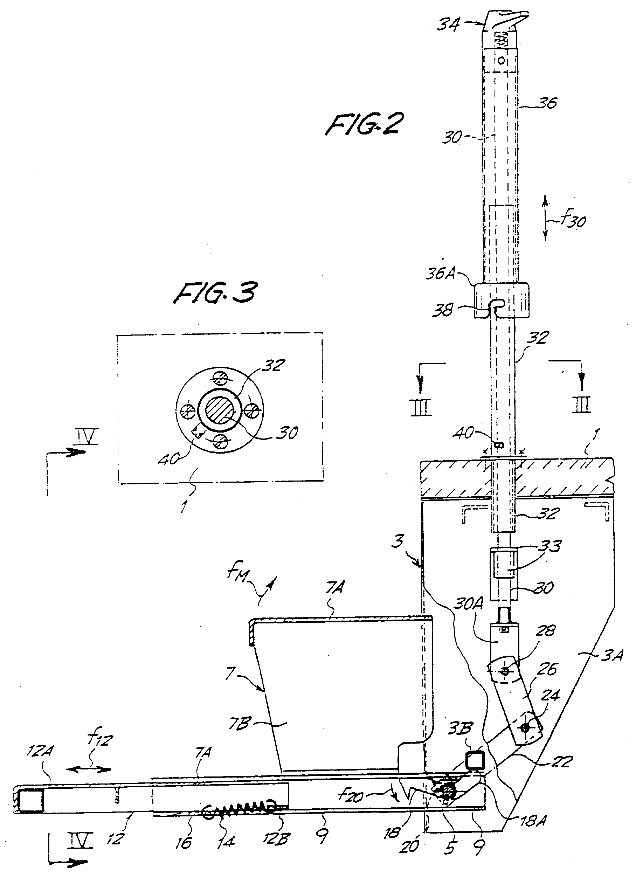

Pivoted to the axis 5 is a unit 7 which forms the tread 7A and which is provided with two vertical side flanges 7B developed downwardly with respect to the tread 7A of the upper step, to support two guide means 9 parallel to the tread 7A and developing, in practice, in the form of two sections having a U-shaped cross section with the concavities facing one another (see in particular Fig. 3). These sections receive a frame 12 which can slide in the direction of arrow f12 along the guides 9 and forms the tread 12A of the second step. The sections 9 of the slide guides develop to such an extent as to rotatively engage the axis 5 and are solid to the unit 7 which is thus pivoted to said axis. In particular, the frame 12 of tread 12A has a rear crosspiece 12B to which at least a tension spring 14 is hooked. The spring is further hooked to a crosspiece 16 which extends between the two guides 9 in the farthest part thereof from the pivot axis 5. The spring 14 tends to force the frame 12, and thus the tread 12A, to move away from the pivot axis 5. Engaged on the pivot axis 5 is a hook 18 which is elastically urged by a spring 20 in the direction of arrow f20, that is to say in the lowering direction, so as to snap-engage the crosspiece 12B of the frame 12 when this is made to return towards the axis 5. The engagement takes place with a trip, owing to the inclined saw-like profile of the hook 18 which is made to snap into engagement, by the spring 20, with the crosspiece 12B with the spring 14 being under tension as shown in Fig. 2. An arm 18A opposite to the hook with respect to the axis 5 and solid with said hook is capable of coming in contact with the crosspiece 3B of the fixed framework 3, for the purposes to be indicated later, when the whole unit 7 is lowered.

A suitable mechanism allows the unit 7 to be moved with respect to the framework 3 about the axis 5. To this end, the unit 7 (comprising also the slide guides 9) is made solid, through the axis 5, to a lever arm 22 whose end is pivoted at 24 to a connecting rod 26 which is in turn articulated to a lower terminal fork 30A of an operating stem 30. The stem 30 can be slidingly driven, in the direction of double arrow f30 within a vertical guide 32 which is engaged to the footboard 1 and projects upwardly and downwardly from said footboard; the stem may further be guided by a bracket 33 which is engaged to one of the flanges 3A of the framework 3. At the upper end projecting from the vertical tubular guide 32, the stem 30 is engaged to a crank or handle 34 which controls both the vertical slidings of the stem 30 in the direction of double arrow f30, and the vertical and horizontal angular movements (about the axis of stem 30) of a sheath 36 which surrounds the guide 32. The bottom end of the sheath 36 is provided with a cap-shaped enlargement 36A wherein an L-shaped recess 38 is formed which is designed to engage with a peg 40 stemming from the guide column 32 when the stem 30, along with the handle 34 and the sheath 36, is moved down and the handle 34 with the sheath 36 is rotated to make the peg enter the horizontal part of the recess 38. The reverse operation makes it possible to disengage the stem thereby causing the lifting thereof.

The vertical lowering of the stem 30 causes the angular lifting of the unit 7, 7A in the direction of arrow fM about the axis 5, in order to make the said unit 7, 7A reach the storage condition shown in Fig. 2, in which the tread 7A takes up a vertical position and the whole unit 7, 7A, 7B, along with the guides 9, is housed within the flanges 3A of the framework 3. In this condition, the frame 12 of the tread 12A is made to come back by gravity, against the action of the spring 14, along the guides 9 and the hook 18 goes over the crosspiece 12B and engages it against the action of spring 14 thereby holding the frame 12 and the tread 12A within the guides 9 and thus within the outline of the framework 3 and of flanges 3A, as shown in Fig. 2, the spring 14 being under tension. From the storage condition shown in Fig. 2, by lifting the stem 30 upwards, as indicated by the double arrow f30, the mechanism 30, 28, 26, 24, 22 drives the unit 7, 7A, 9 into rotation (in a anticlockwise direction when looking at the drawing, i.e. in the direction of arrow fU opposite to arrow fM) to bring said unit from the position of Fig. 2 to the position of Fig. 1, wherein the tread 7A takes up the correct position with respect to the floor of the footboard 1 of the interior compartment of the vehicle, while the guides 9 reach a horizontal position. At the end of the lowering stroke in the direction of arrow fU of the unit 7 into the operative condition, the end of projection 18A, opposite to the hook 18, comes in contact with the crosspiece 3B of the fixed framework 3 and causes the lifting of the hook 18 against the action of the spring 20 thus releasing the crosspiece 12B. Consequently, the tension spring 14 moves outwardly the frame 12 and thus the tread 12A which is consequently positioned in the correct position below and before the tread 7A. In the condition shown in Fig. 1, the treads of the two steps 12A and 7A are in the most suitable position for the use, so as to easily get over the difference in height between the ground on which the vehicle weighs down and the footboard 1 of the interior compartment of the vehicle.

When the steps assembly is to be brought back fixedly into the storage condition shown in Fig. 1 from the condition of Fig. 2, the handle 34 is moved down to lower the stem 30 which, through the leverage 30A, 28, 26, 24, 22, causes the rotation of the axis 5 and then of the unit 7 in the direction of arrow fM until the said unit reaches the position shown in Fig. 2. During the lifting and especially towards the end of the lifting into the vertical position of guides 9, the weight of the frame 12 and of tread 12A causes the sliding of the frame 12 against the action of the spring 14 towards the inside of guides 9 and thus towards the axis 5 until the crosspiece 12B reaches the hook 18. This operation may also be carried out, or faciltated, by manually acting on the frame 12 to cause it to retract; however, by the time the unit 7 is moved into the storage condition shown in Fig. 2, the frame 12 will be surely re-entered and retained by the hook 18. Upon completion of the lifting of unit 7, 7A, 9 and its recovery within the flanges 3A of the framework 3, the sheath 36 has already moved down as far as to cause the peg 10 to enter the recess 38. At this point, by rotating the handle 34, the stem will be locked into the reached position thereby ensuring that the whole unit 7, 7A, 9 will be kept in the storage condition shown in Fig. 2 without any risk of having the steps accidentally fallen down in a protruding position which would be dangerous during movement of the vehicle.

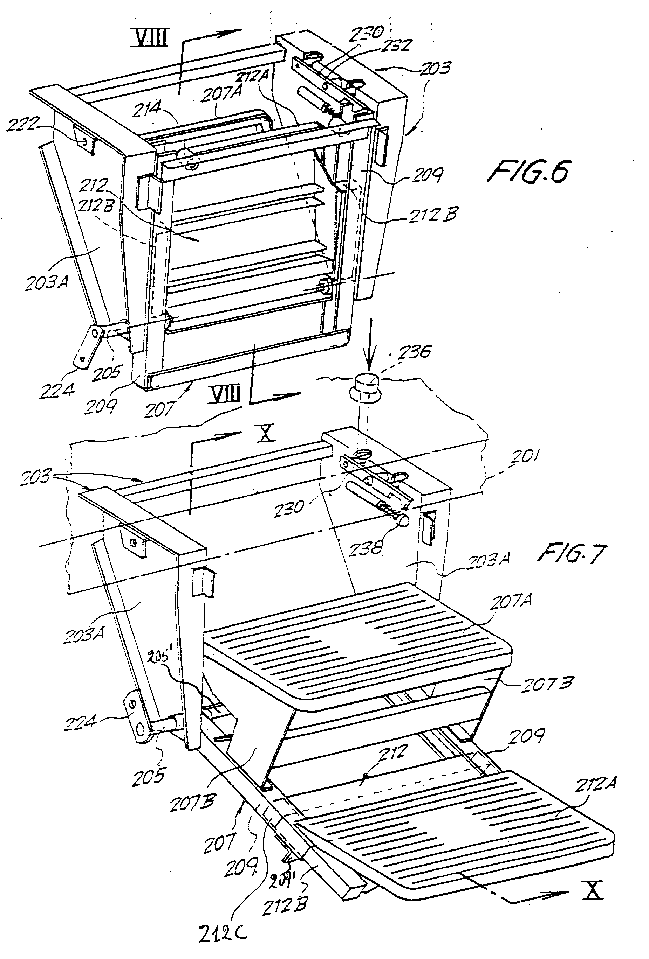

In the embodiment of Fig. 5, wherein the same references are used for members similar to those of the preceding example, the inclination of the slide guides 109 in the unit 7, is changed (with respect to that of guides 9), insofar as they are slightly inclined downwardly and outwardly in the operative condition. The frame 112, which slides within said guides 109, carries the step 112A in a position that is inclined in a direction opposite to that of the guides, in order to take up a horizontal position. This arrangement allows the step 112A to reach a level lower than step 7A and thus closer to the ground; moreover, this inclination facilitates the sliding of frame 112 towards the operative position, allowing the springs 14 to be weaken and even eliminated altogether and moreover allows, at least in some cases, the elimination of the retaining hook 18, as the vertical position is stabilized by the weight of the frame 112 and of the step 112A.

Figs. 6 to 13 show in more detail a solution according to Fig. 5.

Under the structure 201 of the footboard, in correspondence of the door 202, there is fixed a framework 203, which comprises the two flanges 203A between which the steps are stored while driving. Articulated to the two pins 205 defining a pivot axis between the flanges 203A is a unit 207 which comprises the tread of the upper step 207A, two side vertical flanges 207B and two guide means 209 which are inclined with respect to the tread of step 207A and substantially developed in the form of two sections having U-shaped cross section and with facing concavites. These sections receive a frame 212 sliding within the guides 209 which forms the tread 212A of the second step. The sections 209 are made to rotatively engage the pins 205. The frame 212 has shoes 212B which slide within the sections 209, and a crosspiece 212C able to come into abutment with the pegs 214 of the unit 207 to limit the travel of frame 212 in the direction of arrow f10, while in the opposite direction the travel is limited by the same pins 205 against which the shoes 212B are made to abut. The tread 212A is inclined with respect to shoes 212B.

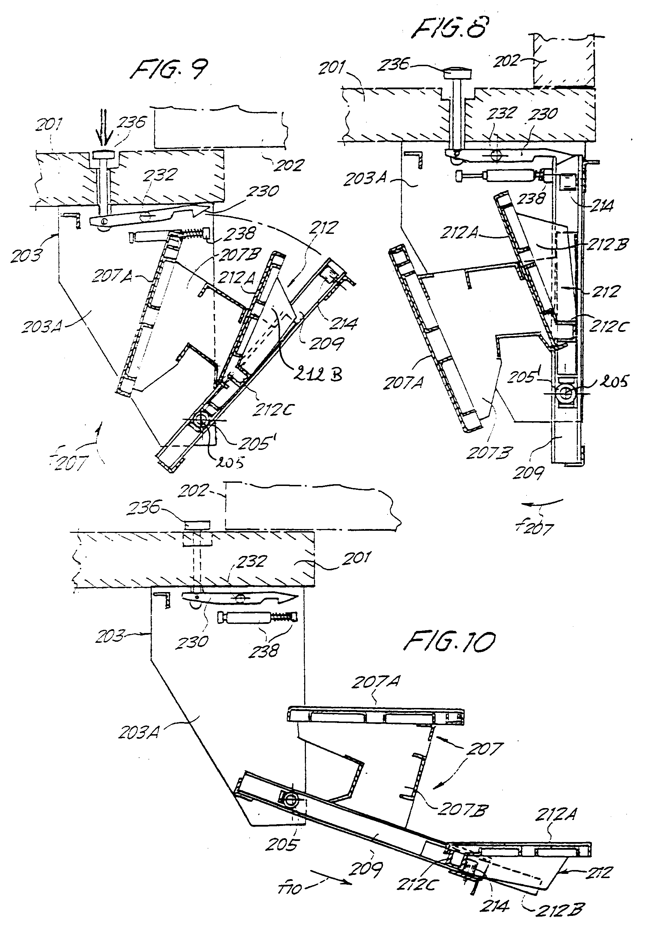

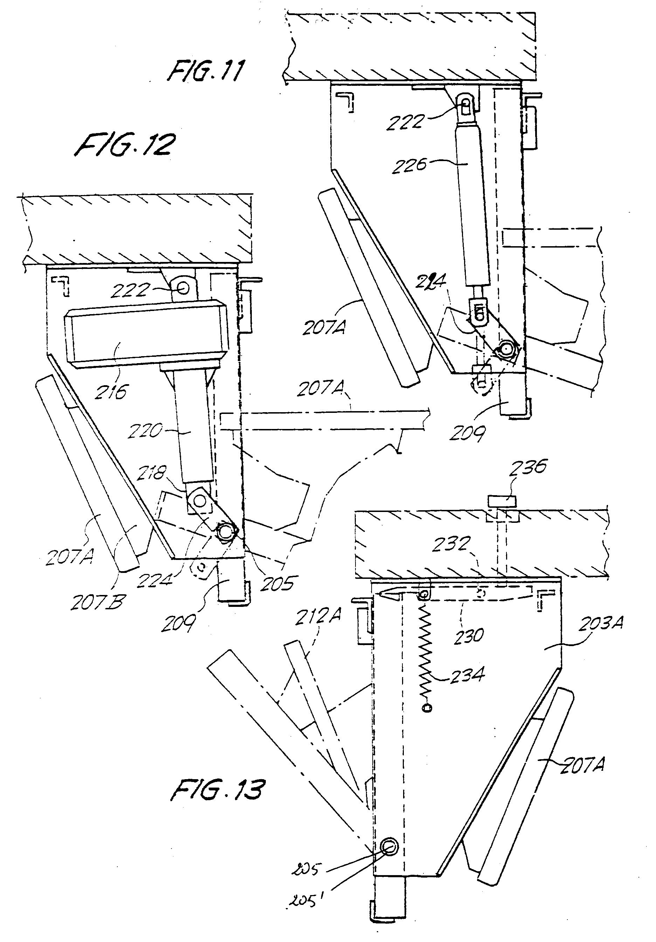

A suitable mechanism allows the unit 207 to be driven with respect to framework 203 about the axis 5. Such mechanism may be manual or motorized. Fig. 12 shows a motor-reducer 216 able to operate the sliding of a stem 218 within a seat 220 which forms part of the motor-reducer casing; said casing is articulated in 222 to the framework 203, while the stem 218 is articulated to an arm 224 solid with the pin 205 which, in turn, is solid with the unit 207. The motor-reducer 216, therefore, allows the unit 207 to take up the lifted and storage position (Fig. 6) as well as the position for the use of the steps (Fig. 7). As an alternative to the motor-reducer 216, between the articulation 222 and the arm 224 a damper member 226 of pneumatic or other type may be provided (Fig. 11) in order to slow down in a controllable manner the lowering of the unit 207 from the position of Fig. 6 to that of Fig. 7. In this case the operations for reaching said two positions may be performed manually.

In the storage position (Fig. 6), the unit 207 must be stabilized by a retaining device, which may be provided even in case of motor-driven actuator as shown in Fig. 12 (which may be irreversible). To this end a holding hook 230, which is pivotally engaged at 232 to the framework, is able to elastically hook-up one of the two sections 209 when this reaches the position of Figs. 6, 11 and 13; the hook 230 is urged by a spring 234 (Fig. 13) mounted externally of the corresponding flange 203A, and is apt to be operated from the inside of the vehicle, e.g. by means of a pedal 236, for its release. An elastic pusher 238 may also be provided to avoid backlash and noise during the ride, and to facilitate the initial displacement from the position shown in Figs. 6 and 8 after the release of hook 230.

When the unit 207 rotates in the direction of arrow f207 and reaches the operative position, the guides 209 rotate about the pivot 205 and take a downwardly inclined position and cause a movement of the frame 212 in the direction of arrow f10, until it reaches the operative position of step 212A which may be at a level lower than that of pin 205; by lifting the unit 207, the frame 212 moves back along the guides 209. Elastic members may be provided to facilitate either of the two displacements of frame 212 along the guides 209.

The steps are suitably covered with rubber or other.

## Claims

1. Apparatus with movable steps, to be installed on habitable vehicles to facilitate the entry and exit thereof in correspondence of remarkable difference in the height from the ground and to make its storage steady during the travel, comprising: a framework (3 - 203) fixed under the footboard (1, 201) of the interior compartment of the vehicle; a unit (7, 9 - 207, 209) which is pivoted on said framework about a horizontal axis (5 - 205) and forms an upper step (7A - 207A) and guide means (9 - 209); a frame (12-212) sliding along said guide means (9 - 209) and forming a lower step (12A - 212A); means for controlling the displacements of said unit (7, 9 - 207, 209) to cause it to take up a storage condition with the two steps (7A, 12A - 207A, 212A) being in vertical position within the outline of the body of the vehicle, and an operative condition with the said steps (7A, 12A - 207A, 212A) in a horizontal position; and sliding means (9,12 - 209,212) to slide said lower step (12A - 112A) to a position projecting to a greater extent and offset with respect to the upper step (7A - 207A) when in operative condition.

2. Apparatus according to claim 1, characterized in that said sliding frame (12) is urged by spring means (14) into the operative condition and is held into a retracted position, against the action of said spring means (14), by a hook (18), which is made inoperative at the end of the down travel of said unit (7, 7A, 7B, 9) to allow the action of said spring means (14).

3. Apparatus according to claim 2, characterized in that said spring means (14) are calibrated to be won by the gravity when the steps are lifted in the vertical position, so that the weight itself of said frame (12) forming the lower step (12A) causes the sliding back of the frame (12, 12A) and its retention by means of the hook (18) at the end of the lifting of the steps (7A, 12A) into the vertical storage condition.

4. Apparatus according to claim 2 or 3, characterized in that the hook (18) is made inoperative by the action of a feed surface (3B) over an appendix (18A) of the same hook, against an elastic counteraction, at the end of the lowering movement of the unit (7,7A,9).

5. Apparatus according to one or more of the preceding claims, characterized in that the guide means (109, 209) are inclined downwardly of more than 90° and outwardly when in operative condition, and the lower step (112A, 212A) is inclined with respect to the frame (112, 212A) to keep it horizontal.

6. Apparatus according to one or more of the preceding claims, characterized in that it comprises an elastic retaining hook (230, 234) to retain the unit (207) into the lifted storage position, and a control (236) for the release thereof.

7. Apparatus according to one or more of the preceding claims, characterized in that it comprises elastic means to urge the frame (212) of the lower step (212A) to slide within the guide means (209) into or away from the operative position.

8. Apparatus according to one or more of the preceding claims, characterized in that it comprises an elastic pusher (238) to stabilize the storage condition and to facilitate the starting of the movement from the storage to the operative condition.

9. Apparatus according to one or more of the preceding claims, characterized in that it comprises a slidable stem (30) with a handle (34), which acts through a leverage (28, 26, 24, 22) on the axis (5) of rotation of the unit (7, 7A, 9); a blocking of said stem (30) being provided in said operative condition, for example by rotation of the same handle.

## Patentansprüche

1. Vorrichtung mit bewegbaren Trittstufen, zum Einbau in bewohnbaren Fahrzeugen, zum Erleichtern des Eintritts und Austritts vom Fahrzeug bei größeren Höhenunterschieden und zum ständigen Lagern während der Fahrt, bestehend aus:
- einem Gestell (3-203) der unterhalb des Bodens (1-201) des inneren Fahrzeugabteils befestigt ist;
- einer Einheit (7,9-207,209) die an diesem Gestell an einer horizontalen Achse (5-205) angelenkt ist und eine obere Trittstufe (7A-207A) und Führungsmittel (9-209) bildet;
- einem Rahmen (12-212) der entlang dieser Führungsmittel (9-209) gleitet und eine untere Trittstufe (12A-212A) bildet;
- Mitteln zum Steuern der Bewegungen der genannten Einheit (7,9-207,209) um dieselbe in eine Lagerposition mit beiden Trittstufen (7A,12A-207A,212A) in vertikaler Lage, und innerhalb des Wagenprofils zu bringen, bzw. in eine Bedienungsposition, in der die Trittstufen (7A, 12A-207A,212A) horizontal liegen;
und Gleitmitteln (9,12-209,212) um die untere Trittstufe (12A, 112A) bis zu einer noch mehr herausragenden Lage gleiten zu lassen, welche Lage versetzt ist bezüglich der oberen Trittstufe (7A-207A) in den Bedienungszustand.

2. Vorrichtung nach Anspruch 1, dadurch gekennzeichnet daß der Gleitrahmen (12) durch Federn (14) in den Bedienungszustand gepresst wird und in einer zurückgezogenen Lage, gegen die Wirkung dieser Federn (14), durch einen Haken (18) gehalten wird, dessen Wirkung am Ende des Absenkens dieser Einheit (7, 7A, 7B, 9) neutralisiert wird, um die Wirkung der Federn (14) zu erlauben.

3. Vorrichtung nach Anspruch 2, dadurch gekennzeichnet daß die genannten Federmittel (14) so geeicht werden, daß sie durch die Schwerkraft überwunden werden, wenn die Trittstufen in die vertikale Lage gehoben sind, derart daß das Gewicht allein des die untere Trittstufe (12A) bildenden Rahmens (12) das Zurückgleiten des Rahmens (12, 12A) und seine Haltung durch den Haken (18) am Ende der Hubbewegung der Trittstufen (7A,12A) in die vertikale Lagerposition, bewirkt.

4. Vorrichtung nach Anspruch 2 oder 3, dadurch gekennzeichnet daß die Wirkung des Hakens (18) durch die Wirkung einer festen Oberfläche (3B) auf einem Fortsatz (18A) des Hakens neutralisiert wird, gegen einen elastischen Gegendruck, am Ende des Absenkens der Einheit (7, 7A, 9).

5. Vorrichtung nach einem oder mehreren der vorgehenden Ansprüchen, dadurch gekennzeichnet daß die Führungsmittel (109-209) nach unten und nach außen geneigt sind um mehr als 90° in der Bedienungsposition, wobei die untere Trittstufe (112A,212A) bezüglich des Rahmens (112, 212A) geneigt ist um sie horizontal zu halten.

6. Vorrichtung nach einem oder mehreren der vorgehenden Ansprüchen, dadurch gekennzeichnet daß sie einen elastischen Haltehaken (230, 234), um die Einheit (207) in die gehobene Lagerposition zu halten, und ein Steuermittel (236) für die Auslösung desselben, aufweist.

7. Vorrichtung nach einem oder mehreren der vorgehenden Ansprüchen, dadurch gekennzeichnet daß sie elastische Mittel um den Rahmen (212) der unteren Trittstufe (212A) innerhalb der Führungsmittel (209) in Richtung Bedienungsposition oder in die entgegengesetzte Richtung gleiten zu lassen, aufweist.

8. Vorrichtung nach einem oder mehreren der vorgehenden Ansprüchen, dadurch gekennzeichnet daß sie ein elastisches Schubmittel (238) aufweist, zum Stabilisieren der Lagerposition und zum Erleichtern des Bewegungbeginns aus der Lagerposition in die Bedienungsposition.

9. Vorrichtung nach einem oder mehreren der vorgehenden Ansprüchen, dadurch gekennzeichnet daß sie eine Gleitstange (30) mit Handgriff (34) aufweist, welche durch einen Hebelmechanismus (28, 26, 24, 22) auf die Drehachse (5) der Einheit (7, 7A, 9) wirkt; wobei das Festklemmen dieser Stange (30) in der Bedienungsposition beispielsweise durch Rotation des Handgriffs erhalten wird.

## Revendications

1. Dispositif de marches escamotables, destiné à être monté sur des véhicules habitables pour y faciliter l'entrée et la sortie en présence d'un dénivellement remarquable par rapport au terrain et pour rendre stable son emplacement pendant le voyage, ce dispositif comprenant: un bâti (3 - 203) fixé sous le marchepied (1, 201) du compartement intérieur du véhicule; une unité (7, 9 - 207, 209) pivotant sur ce bâti autour d'un axe horizontal (5 - 205) et formant une marche supérieure (7A - 207A) et des moyens de guidage (9 - 209); un châssis (12 - 212) glissant lelong desdits moyens de guidage (9 - 209) et formant une marche inférieure (12A - 212A); des moyens pour contrôler les déplacements de cette unité (7, 9 - 207, 209) afin de lui faire prendre la condition de repos avec les deux marches (7A, 12A - 207A, 212A) en position verticale dans le profil du corps du véhicule, et une condition de service avec les deux marches (7A, 12A - 207A, 212A) en position horizontale; et des moyens de glissage (9, 12 - 209, 212) pour faire glisser la marche inférieure (12A - 112A) vers une position plus saillante et décalée par rapport à la marche supérieure (7A - 207A) pendant la condition de service.

2. Dispositif selon la Revendication 1, caractérisé en ce que le châssis glissant (12) est soumis aux sollicitations de moyens A ressort (14) en condition de service et qu'il est maintenu en position retractée, en opposition à l'action desdits moyens à ressort (14), par un crochet (18) qui est rendu incapable de fonctionner à la fin de la descente de ladite unité (7, 7A, 7B, 9) pour permettre l'action des moyens à ressort (14).

3. Dispositif selon la Revendication 2, caractérisé en ce que les moyens A ressort (14) sono tarés de façon à être gagnés par la gravité quand les marches sont soulevées en position verticale, de sorte que le poids même du châssis (12) qui forme la marche inférieure (12A) cause le glissement en arrière du châssis (12, 12A) et son blocage par le crochet (18) A la fin du soulèvement des marches (7A, 12A) dans la position verticale de repos.

4. Dispositif selon la Revendication 2 ou 3, caractérisé en ce que le crochet (18) est rendu inactif par l'action d'une surface fixe (3B) sur un appendix (18A) du crochet même, contre une action élastique contraire, à la fin du mouvement de descente de l'unité (7, 7A, 9).

5. Dispositif selon une ou plusieurs des revendications précédentes, caractérisé en ce que les moyens de guidage (109, 209) ont une inclination vers le bas supérieure à 90° et une inclination vers l'extérieur en condition de service, et que la marche inférieure (112A, 212A) est inclinée par rapport au châssis (112, 212A) afin de le maintenir en position horizontale.

6. Dispositif selon une ou plusieurs des revendications précédentes, caractérisé en ce qu'il comprend un crochet élastique de blocage (230, 234) pour bloquer l'unité (207) dans la position soulevée de repos, et un bouton de commande (236) pour dégager l'unité même.

7. Dispositif selon une ou plusieurs des revendications précédentes, caractérisé en ce qu'il comprend des moyens élastiques qui font glisser le chassis (212) de la marche inférieure (212A) dans les moyens de guidage (209) pour lui faire prendre ou abandonner la position de service.

8. Dispositif selon une ou plusieurs des revendications précédentes, caractérisé en ce qu'il comprend un engin pousseur à ressort (238) pour stabiliser la condition de repos et faciliter l'amorce du mouvement de la condition de repos à la condition de service.

9. Dispositif selon une ou plusieurs des revendications précédentes, caractérisé en ce qu'il comprend une tige glissante (30) avec une poignée (34), qui agit par un méchanisme de leviers (28, 26, 24, 22) sur l'axe (5) de rotation de l'unité (7, 7A, 9); un blocage de la tige (30) étant prévu en condition de service, par example par la rotation de la poignée même.
